# EUROPÄISCHE PATENTSCHRIFT

(11) **EP 0 880 482 B1**
(45) Veröffentlichungstag und Bekanntmachung des Hinweises auf die Patenterteilung: **15.12.1999**
(21) Anmeldenummer: 97903292.7
(22) Anmeldetag: 15.02.1997
(51) Int. Cl.: C04B 35/66, C04B 35/65, F27D 1/16

(54) **VERFAHREN ZUM HERSTELLEN EINER FEUERFESTEN AUSKLEIDUNG FÜR ÖFEN UND BEHÄLTER**
METHOD OF PRODUCING A REFRACTORY LINING FOR FURNACES AND CONTAINERS
PROCEDE PERMETTANT DE PRODUIRE UNE GARNITURE INTERIEURE REFRACTAIRE POUR FOURS ET CONTENEURS

(30) Priorität: 17.02.1996 DE 19606007
(43) Veröffentlichungstag der Anmeldung: 02.12.1998
(73) Patentinhaber: FOSBEL GMBH, 53881 Euskirchen (DE)
(72) Erfinder: POTH, Johannes, D-53937 Gemünd (DE); GAMERS, Klaus, D-40489 Düsseldorf (DE); SMART, James, West Midlands B62 0BY (GB); MACFARLANE, Will, Erdington, Birmingham B24 0BX (GB)
(74) Vertreter: Clayton, Anthony Nicholas
(86) Internationale Anmeldenummer: EP9700718
(87) Internationale Veröffentlichungsnummer: WO9730006

(56) Entgegenhaltungen:
- EP-A- 0 426 848
- DATABASE WPI Week 9417 Derwent Publications Ltd., London, GB; AN 94-143224 XP002031713 & SU 1 796 853 A (KAZA INTERBRANCH SCI.-TECH. CENTRE) , 23.Februar 1993 in der Anmeldung erwähnt
- DATABASE WPI Week 8348 Derwent Publications Ltd., London, GB; AN 83-831037 XP002031714 & JP 58 049 586 B (MITSUBISHI CHEM. IND. LTD.) , 5.November 1983

## Beschreibung

Auskleidungen für Öfen und Behälter sind hohen thermischen, mechanischen und/oder chemischen Beanspruchungen ausgesetzt.

Derartige Auskleidungen lassen sich durch Beschichten des äußeren, im allgemeinen aus Stahlblech bestehenden Ofen- oder Behältermantels mit einem entsprechenden Material oder durch Aufmauern von vorgeformten Steinen herstellen. Je nachdem, ob es sich in erster Linie um thermische, chemische und/oder mechanische Beanspruchungen handelt, wird das Material der Auskleidung gewählt. Im allgemeinen ist das gewählte Material um so teurer, je widerstandsfähiger es gegen diese Angriffe ist, insbesondere, wenn gefordert wird, daß dieses Material allen Beanspruchungen, d. h. den thermischen, chemischen und mechanischen Beanspruchungen widerstehen soll. Als Auskleidungen für Öfen haben sich Formsteine z. B. aus Magnesit, Silikat, Schamotte, Aluminiumoxid bewährt, von denen Schamotte am billigsten, aber auch am wenigsten widerstandsfähig ist.

Monolithische Ofenauskleidungen aus einem feuerfesten Material sind in der europäischen Patentanmeldung 0 426 848 beschrieben, das sich als Auskleidungsüberzug für Zement- und Stahlschmelzöfen und Stahlgießpfannen sowie als in einer Verbindungsfuge feuerfeste Steine zu einem Monolith verschweißende Masse einsetzen läßt. Dieses Material wird zur Verarbeitung als exothermes Gemisch hergestellt, mit Wasser zu Mörtel verarbeitet und zum Verfugen beim Aufmauern von Feuerfeststeinen verwandt oder als Auskleidung auf die Oberfläche einer bereits vorhandenen, feuerfesten Ausmauerung aufgebracht, durch Erwärmen getrocknet und danach gezündet, woraufhin die Masse unter großer Wärmeentwicklung vollständig durchbrennt, versintert und die feuerfesten Steine zu einem Monolith verschweißt.

Dieser bekannte reaktive Mörtel ist vergleichsweise kostspielig und wird daher vorzugsweise in möglichst geringen Mengen eingesetzt.

Bekannt ist des weiteren aus der SU 1796853 A1, die Herstellungskosten von feuerfesten Steinen dadurch herabzusetzen, daß diese aus einer Verschleißschicht mit einer hohen thermischen, chemischen und mechanischen Beanspruchungen widerstehenden Zusammensetzung und einer geringwertigeren Trägerschicht hergestellt werden. Zur Herstellung derartiger Steine werden in eine Preßform eine Schicht des jeweiligen Materials eingebracht, verpreßt und gesintert und durch Abbrennen eines zwischen den Schichten angeordneten reaktiven, exothermen Mörtels verbunden, so daß ein feuerfester Stein mit einer Verschleißschicht und einer Trägerschicht entsteht. Danach werden die so erzeugten Verbundsteine zu einer Ofen- oder Behälterauskleidung aufgemauert. Bei diesen Verbundsteinen besteht jedoch die Gefahr der Rißbildung, da die Verschleißschicht und die Trägerschicht unterschiedliche Wärmedehnungskoeffizienten aufweisen und daher nach dem Einbau beim Erwärmen Wärmespannungen entstehen. Dies führt zu einer schnellen Zerstörung der Auskleidung und zusätzlich zu einem chemischen Angriff des Ofenmantels durch die korrosiven Gase im Ofen, die durch die Risse in den feuerfesten Steinen bis zum Ofenmantel gelangen können.

Der Erfindung liegt das Problem zugrunde, ein Verfahren zum Herstellen von Auskleidungen für Öfen oder Behälter zu schaffen, mit dem sich Auskleidungen bei hohem Widerstand gegen thermische, chemische und mechanische Beanspruchung preisgünstig herstellen, sowie leicht bearbeiten lassen und die dauerhaft in der Benutzung sind.

Ausgehend von dieser Problemstellung wird ein Verfahren zum Herstellen einer feuerfesten Auskleidung für Öfen oder Behälter vorgeschlagen, bei dem erfindungsgemäß die Auskleidung durch Aufmauern von vorgefertigten Verbundsteinen aus mindestens einer dünneren, vorgefertigten, einen hohen Widerstand gegen thermische, chemische und mechanische Beanspruchungen aufweisenden, hochdicht gepreßten und gesinterten keramischen Deckschicht und mindestens einer dickeren, keren, vorgefertigten, wärmeisolierenden, weniger dicht gepreßten und gesinterten keramischen Trägerschicht, die mittels eines ein Bindemittel, das eine ausreichende Grünfestigkeit und Transportfähigkeit ergibt, enthaltenden, reaktiven, exothermen Mörtels verbunden sind, hergestellt und der Mörtel nach dem Aufmauern und Aufheizen der aufgemauerten Auskleidung gezündet wird, so daß durch das Abbrennen in situ eine fest haftende, feuerfeste keramische Bindung zwischen den Schichten bewirkt wird.

Durch die keramische Bindung, die durch das Abbrennen des reaktiven, exothermen Mörtels bewirkt wird, entsteht eine monolithische Verbindung zwischen der Deckschicht und der Trägerschicht, wobei die Deckschicht, die den thermischen, chemischen und mechanischen Beanspruchungen zu widerstehen hat, verhältnismäßig dünn ausgeführt sein kann, während die Trägerschicht, die nur geringen Anforderungen genügen muß, dicker sein kann, so daß insgesamt eine Auskleidung geschaffen ist, die in der Herstellung erheblich preisgünstiger ist als eine Auskleidung aus einem einheitlichen Material, das insgesamt den geforderten Anforderungen entsprechen muß.

Der reaktive, exotherme Mörtel erlaubt es, sowohl gleichartige als auch ungleichartige Materialien durch eine keramische Bindung fest haftend aneinander zu binden, so daß es möglich ist, im Falle der Verwendung der erfindungsgemäßen Auskleidung in Öfen für die Deckschicht Magnesit oder Aluminiumoxid und für die Trägerschicht Silikat oder Schamotte zu verwenden. In diesem Fall besitzt die Deckschicht einen hohen Widerstand gegen thermische, chemische und mechanische Beanspruchungen, während die Trägerschicht aus einem gut wärmeisolierenden Material besteht.

Vorzugsweise kann die Deckschicht aus hochdicht verpreßtem und gesintertem keramischen Material aus oxidischen oder nichtoxidischen Massen oder aus Mischkeramiken aus oxidischen und nichtoxidischen Massen bestehen, z. B. aus Aluminiumoxid, Siliziumnitrid, Aluminiumnitrid, Titannitrid, Zirkonnitrid, Yttriumnitrid, Magnesiumnitrid, Berylliumnitrid, hexagonales oder kubisches Bornitrid, Siliziumkarbid, Borkarbid, Titankarbid, Tantalkarbid, Wolframkarbid oder Mischungen daraus.

Diese keramische Materialien weisen eine besonders hohe thermische und chemische Beständigkeit, Abriebfestigkeit und einen hohen Widerstand gegen mechanische Beanspruchungen auf, so daß sie sich für die Verwendung in Öfen, aber auch für Behälter eignen.

Die Trägerschicht kann demgegenüber aus porösem und/oder mit Hohlräumen bzw. Kanälen versehenem keramischen Material bestehen, das aus dem gleichen Grundmaterial wie die Deckschicht oder aus einem anderen Grundmaterial bestehen kann.

Wenn die Trägerschicht aus porösem und/oder mit Hohlräumen bzw. Kanälen versehenem keramischen Material besteht, ist dadurch eine gute Wärmeisolierung gewährleistet.

Da in Öfen häufig aggressive Gase vorhanden sind, ist es vorteilhaft, diese aggressiven Gase von der im allgemeinen metallischen Außenwandung der Öfen oder Behälter fernzuhalten. Dies läßt sich erreichen, wenn die die wenigstens eine Deckschicht und die die wenigstens eine Trägerschicht und/oder ggf. eine Zwischenschicht verbindende Mörtelschicht vermindert gasdurchlässig eingestellt wird. Die Mörtelschicht bildet eine Barriere gegen die aggressiven Gase, die daher nicht durch die Trägerschicht bis zum Mantel gelangen können.

Die erfindungsgemäße Auskleidung läßt sich in Öfen einsetzen, in denen große Temperaturschwankungen auftreten bzw. große Temperaturunterschiede insbesondere während der Aufheizphase herrschen, selbst wenn die Wärmedehnungskoeffizienten der Deckschicht und der Trägerschicht unterschiedlich sind, da diese Schichten zunächst mittels eines ein Bindemittel enthaltenden, reaktiven, exothermen Mörtels verbunden werden, der bereits eine ausreichende Grünfestigkeit sowie Transportfähigkeit ergibt, und dieser Mörtel erst nach dem Aufmauern und Aufheizen der Auskleidung gezündet wird, so daß erst dann durch das Abbrennen eine fest haftende, keramische Bindung zwischen den Schichten bewirkt wird. So entsteht erfindungsgemäß eine festhaftende Verbindung erst nach der temperaturbedingten Ausdehnung der einzelnen Komponenten.

Da in diesem Fall die keramische Bindung erst bei den im Ofen herrschenden Temperaturen hervorgerufen wird, treten Spannungen aufgrund unterschiedlicher Wärmedehnungen nicht mehr auf und die Gefahr der Rißbildung ist beseitigt. Bei diesem Verfahren, bei dem der reaktive, exotherme Mörtel erst nach dem Einbau der Auskleidung gezündet wird, lassen sich somit sehr unterschiedliche Materialien für die Deckschicht und für die Trägerschicht miteinander mechanisch und kristallographisch fest verbinden, ohne daß die Gefahr der Rißbildung besteht.

Da die Deckschicht und die Trägerschicht jeweils getrennt voneinander verpreßt und gesintert werden, lassen sich die Verarbeitungsbedingungen gezielt auf die Anwendungsanforderungen einstellen, z. B. hinsichtlich der Materialauswahl, der Dichte, der Sinterung, so daß sich Auskleidungen herstellen lassen, die sich einem weiten Anwendungsspektrum anpassen lassen, ohne die Herstellungskosten sonderlich in die Höhe zu treiben.

Besonders vorteilhaft ist es, wenn beim Aufmauern einer Auskleidung für Öfen oder Behälter ein reaktiver, nach einer vorbestimmten Eindringtiefe selbst verlöschender, feuerfester Mörtel aus einem Gemisch eines Reduktionsmittels, eines Oxidationsmittels, eines Binders und eines Füllstoffs zum Verfugen verwendet wird. Ein derartiger Mörtel ist in der Patentanmeldung P 44 32 047.2 der gleichen Anmelderin beschrieben und weist den Vorteil auf, daß einerseits ein guter Verbund der Auskleidung im reagierten Bereich des Mörtels erreicht wird, daß aber der nicht durchgebrannte Teil des Mörtels in der Fuge nur in geringerem Maße an den Steinen haftet, so daß das Ausbrechen der Auskleidung im Bedarfsfalle ganz erheblich erleichtert wird. Auch gelangt die Verbrennungshitze des Mörtels nicht bis an die Auskleidungsummantelung, die daher nicht beschädigt werden kann.

Die Erfindung wird nachstehend anhand zweier in der Zeichnung dargestellter Ausführungsbeispiele des näheren erläutert. In der Zeichnung zeigen:
- Fig. 1: eine perspektivische Ansicht eines Verbundsteines aus einer Deckschicht, einer Trägerschicht und einer diese verbindenden Mörtelschicht und
- Fig. 2: eine Schnittansicht eines Verbundsteines aus einer Deckschicht, einer Zwischenschicht und einer Trägerschicht sowie zwischen diesen Schichten angeordneten Mörtelschichten.

Bei den Ausführungsbeispielen handelt es sich um Verbundsteine für Auskleidungen von Öfen, die hohen thermischen, chemischen und mechanischen Beanspruchungen ausgesetzt sind. Aus diesem Grund besteht eine Deckschicht 1 aus hochwertigem keramischen Material wie z. B. Magnesit, Aluminiumoxid, Metallnitriden oder Karbiden oder Mischkeramiken aus oxidischen und nichtoxidischen Massen. Diese Deckschicht 1 ist hochverdichtet verpreßt und gesintert.

Eine Trägerschicht 2, die z. B. aus Silikat oder Schamotte bestehen kann, ist gering verdichtet verpreßt und weist Kanäle 4 und/oder Hohlräume 5 sowie weitere, nur angedeutet Porositäten auf, so daß die Trägerschicht 2 gut wärmeisolierend ist.

Verbunden sind die Deckschicht 1 und die Trägerschicht 2 mittels eines reaktiven, exothermen Mörtels 3, der beim Brennen lokal hohe Temperaturwerte von 1700° C und mehr entwickelt, die die Synthese des Mörtels mit einer Struktur gewährleisten, die durch chemische und Diffusionsumsetzung der Komponenten der aktiven Phase des Gemenges miteinander und mit der Oberfläche der Teilchen des Füllmittels gebildet wird und die untereinander und mit der Deckschicht 1 sowie der Trägerschicht 2 mittels keramischer Bindung fest haften.

Der reaktive, exotherme Mörtel enthält ein Bindemittel, das den Mörtel vor dem Zünden abbinden läßt, so daß sich die Auskleidung aus vorgefertigten Verbundsteinen aus einer Trägerschicht und einer damit mittels des reaktiven, jedoch noch nicht gezündeten Mörtels verbundenen Deckschicht aufmauern läßt. Der reaktive, exotherme Mörtel wird erst gezündet, wenn die Auskleidung z. B. eines Ofens fertig aufgemauert ist und der Ofen auf seine Betriebstemperatur angewärmt wird. Dies hat den Vorteil, daß sich sowohl die Deckschicht 1 als auch die Trägerschicht 2 bereits auf Betriebstemperatur oder in der Nähe der Betriebstemperatur befinden, wenn der Mörtel zündet und durchbrennt, so daß sich keine wesentlichen Temperaturunterschiede zwischen den Schichten mehr ergeben. Eine Rißbildung aufgrund von Dilatationsunterschieden der Schichten ist daher ausgeschlossen.

Die Mörtelschicht 3 läßt sich auch so einstellen, daß sie im wesentlichen gasundurchlässig ist, wodurch sich korrosive Gase, die in die Deckschicht 1 hineindefundiert sind, von der Trägerschicht 2 und insbesondere von einem Blechmantel, der die Auskleidung umgibt, fernhalten lassen.

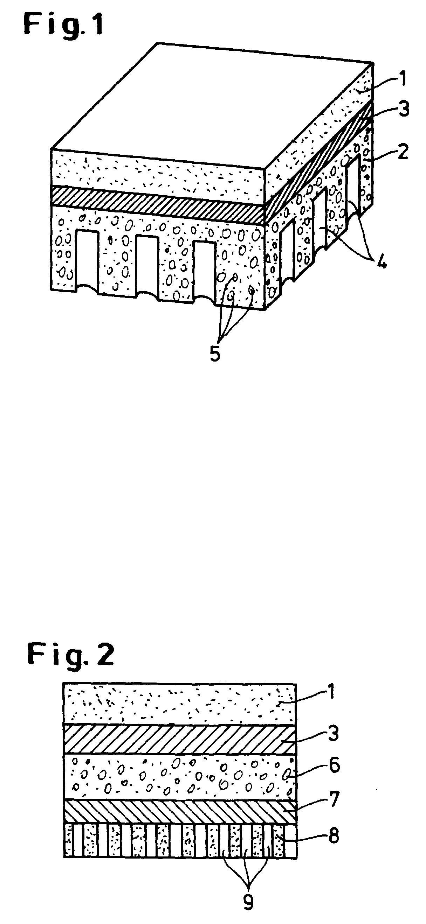

Bei dem Ausführungsbeispiel gemäß Fig. 2 sind eine Deckschicht 1, eine Zwischenschicht 6 und eine Trägerschicht 8 vorhanden, die jeweils mittels einer reaktiven, exothermen Mörtelschicht 3 und 7 miteinander verbunden sind.

Die Deckschicht 1 kann wieder aus einem hochfesten, gegen thermische, chemische und mechanische Beanspruchungen widerstandsfähigen keramischen Material bestehen, während die Zwischenschicht 6 aus billigerem, grobkörnigen Material bestehen kann.

Die Trägerschicht 8 ist mit einer Vielzahl von Kanälen 9 versehen und aufgrund des verwendeten Materials sowie dieser Kanäle gut wärmeisolierend. Bei der Mörtelschicht 3 kann es sich um einen reaktiven, exothermen Mörtel handeln, der eine besonders gute keramische Bindung zwischen der Deckschicht und der Zwischenschicht 6 gewährleistet, während die Mörtelschicht 7 wiederum zusätzlich die Aufgabe haben kann, die Diffusion von Gasen durch die Trägerschicht 8 hindurch bis zu einem nicht dargestellten Mantel für die Auskleidung zu verhindern.

Zum Aufmauern und Verfugen der erfindungsgemäßen Auskleidung läßt sich ein reaktiver, nach einer vorbestimmbaren Eindringtiefe selbst verlöschender, feuerfester Mörtel aus einem Gemisch eines Reduktionsmittels eines Oxidationsmittels, eines Binders und eines Füllstoffs verwenden, der sich so einstellen läßt, daß die Eindringtiefe entweder bis zur Mörtelschicht 3 oder bis zur Mörtelschicht 7 reicht. Im ersten Fall zündet beim Aufheizen der Auskleidung zunächst der Fugenmörtel, gelangt bis zur Mörtelschicht 3 und zündet diese, so daß ein fester Verbund zwischen der Deckschicht 1 und der Zwischenschicht 6 hergestellt wird.

Wird das Abbrennverhalten des Fugenmörtels so eingestellt, daß auch die Mörtelschicht 7 erreicht wird, wird durch das Aufheizen der Auskleidung ein monolithischer Verbund der drei Schichten untereinander bewirkt, ohne daß die einzelnen Steine untereinander zu fest aneinander haften.

Die Wirkungsweise und Zusammensetzung des reaktiven, nach einer vorbestimmbaren Eindringtiefe selbst verlöschenden feuerfesten Mörtels ist in der deutschen Patentanmeldung P 44 33 047.2 der gleichen Anmelderin beschrieben. Für die Mörtelschichten 3 und 7 läßt sich der gleiche, reaktive, nach einer vorbestimmbaren Eindringtiefe verlöschende feuerfeste Mörtel verwenden, der in waagerechten Schichten jedoch wie ein normaler reaktiver exothermer Mörtel durchbrennt.

Die Verwendung eines selbstverlöschenden oder nicht selbstverlöschenden feuerfesten Mörtels hängt von den Umständen des Anwendungsfalles und der Art der Verarbeitung ab und läßt sich durch Versuche von Fall zu Fall bestimmen.

## Patentansprüche

1. Verfahren zum Herstellen einer feuerfesten Auskleidung für Öfen oder Behälter durch Aufmauern von vorgefertigten Verbundsteinen aus mindestens einer dünneren, vorgefertigten, einen hohen Widerstand gegen thermische, chemische und mechanische Beanspruchungen aufweisenden, hochdicht gepreßten und gesinterten keramischen Deckschicht und mindestens einer dickeren, vorgefertigten, wärmeisolierenden, weniger dicht gepreßten und gesinterten keramischen Trägerschicht, die mittels eines ein Bindemittel, das eine ausreichende Grünfestigkeit und Transportfähigkeit ergibt, enthaltenden, reaktiven, exothermen Mörtels verbunden sind, der nach dem Aufmauern und Aufheizen der aufgemauerten Auskleidung gezündet wird und durch das Abbrennen in situ eine fest haftende, feuerfeste keramische Bindung zwischen den Schichten bewirkt.

2. Verfahren nach Anspruch 1, **gekennzeichnet durch** die Verwendung eines reaktiven, nach einer vorbestimmbaren Eindringtiefe selbstverlöschenden, feuerfesten Mörtels aus einem Gemisch eines Reduktionsmittels, eines Oxidationsmittels, eines Binders und eines Füllstoffs zum Verfugen von Auskleidungen für Öfen oder Behältern und gegebenenfalls zum Verbinden der Deckschicht mit der Trägerschicht der zum Aufmauern der Auskleidung verwendeten Verbundsteine.

3. Verfahren nach Anspruch 1 oder 2, **gekennzeichnet durch** die Verwendung einer die wenigstens eine Deckschicht (1) und die wenigstens eine Trägerschicht (2) sowie ggf. eine Zwischenschicht (6) verbindende Mörtelschicht (3, 7) mit verminderter Gasdurchlässigkeit.

## Claims

1. Process for the manufacture of a fire-resistant cladding for furnaces or containers, by the construction as a wall of prefabricated composite bricks made of at least one fairly thin prefabricated high-density compressed and sintered ceramic cover layer, featuring a high resistance to thermal, chemical, and mechanical stresses, and at least one fairly thick prefabricated, thermally-insulating, less densely compressed and sintered ceramic carrier layer, which are bonded by means of a reactive exothermal mortar which contains a bonding agent featuring adequate basic strength and transport capability, which, after the cladding has been erected and heated up, is ignited and, due to the in-situ combustion, produces a firmly-adhering fire-resistant ceramic bind between the layers.

2. Process according to Claim 1, characterised by the use of a reactive fire-resistant mortar, self-extinguishing after a penetration depth which can be predetermined, made of a mixture of a reduction agent, an oxidation agent, a binder, and a filling substance, for the jointing of cladding structures for furnaces or containers, and, if applicable, for the bonding of the cover layer and the carrier layer of the composite bricks used for constructing the cladding wall.

3. Process according to Claim 1 or 2, characterised by the use of a mortar layer (3, 7), binding at least one cover layer (1) and at least one carrier layer (2), as well as, if applicable, an intermediate layer (6), with reduced gas permeability.

## Revendications

1. Procédé de fabrication d'un revêtement réfractaire pour fours ou réservoirs, par maçonnage de briques composites préfabriquées constituées d'au moins une couche de couverture céramique plus mince, préfabriquée, pressée haute densité et frittée, présentant un grande résistance aux sollicitations thermiques, chimiques et mécaniques, et d'au moins une couche de support céramique plus épaisse, préfabriquée, thermiquement isolante, pressée moins dense et frittée, qui sont assemblées au moyen d'un mortier exotherme, réactif, qui contient un liant conférant une résistance à cru suffisante et autorisant le transport, et qui après maçonnage et chauffage du revêtement maçonné est allumé et provoque une liaison céramique réfractaire, adhérant fermement, entre les couches, du fait de la cuisson sur site.

2. Procédé selon la revendication 1, caractérisé par l'utilisation d'un mortier réfractaire, réactif, à auto-extinction après une profondeur de pénétration prédéterminée, constitué d'un mélange d'un agent de réduction, d'un agent d'oxydation, d'un liant et de charges pour jointoyer des revêtements pour fours ou réservoirs et éventuellement pour lier la couche de couverture à la couche de support des briques composites utilisées pour le maçonnage du revêtement.

3. Procédé selon la revendication 1 ou 2, caractérisé par l'utilisation d'une couche de mortier (3, 7) qui assemble la ou les couche(s) de couverture (1) et la ou les couche(s) de support (2) ainsi qu'éventuellement une couche intermédiaire (6) et qui présente une perméabilité réduite aux gaz.
